# EUROPÄISCHE PATENTSCHRIFT

(11) **EP 2 346 730 B1**
(45) Veröffentlichungstag und Bekanntmachung des Hinweises auf die Patenterteilung: **02.04.2014**
(21) Anmeldenummer: 10750077.9
(22) Anmeldetag: 12.08.2010
(51) Int. Cl.: B62D 1/10, B62D 5/00, B60H 1/00, F28D 15/02, B62D 1/06, B60R 16/027

(54) **LENKRAD FÜR EIN KRAFTFAHRZEUG MIT MITTELN ZUR ABLEITUNG VON WÄRME**
STEERING WHEEL FOR A MOTOR VEHICLE HAVING MEANS FOR DISSIPATING HEAT
VOLANT POUR UN VÉHICULE DOTÉ DE MOYENS POUR DÉVIER LA CHALEUR

(30) Priorität: 14.08.2009 DE 102009037670
(43) Veröffentlichungstag der Anmeldung: 27.07.2011
(73) Patentinhaber: Takata AG, 63743 Aschaffenburg (DE)
(72) Erfinder: MARKFORT, Dieter, 13088 Berlin (DE); WERDIN, Philipp, 13467 Berlin (DE)
(74) Vertreter: Müller, Wolfram Hubertus
(86) Internationale Anmeldenummer: PCT/EP2010/061765
(87) Internationale Veröffentlichungsnummer: WO 2011/018502

(56) Entgegenhaltungen:
- EP-A1- 1 783 029
- WO-A1-03/047942
- DE-A1-102004 006 639
- DE-U1-202008 008 395
- JP-A- 62 157 859

## Beschreibung

Die Erfindung betrifft ein Lenkrad für ein Kraftfahrzeug nach dem Oberbegriff des Patentanspruchs 1.

Ein Lenkrad eines Kraftfahrzeugs dient zur Steuerung der Fortbewegungsrichtung des Kraftfahrzeuges. So weist ein solches Lenkrad z. B. einen Lenkradkranz zur drehenden Betätigung des Lenkrades und eine Lenkradnabe zur Verbindung des Lenkrades mit einer von dem Lenkrad separaten Lenkwelle des Kraftfahrzeuges auf. Die Lenkwelle wiederum wirkt z. B. mit anderen Getriebeteilen des Kraftfahrzeuges so zusammen, dass über ihre Bewegung eine Steuerung der Fortbewegungsrichtung des Kraftfahrzeuges ermöglicht ist.

Es ist üblich, zu unterschiedlichen Funktionszwecken Motor- und/oder Getriebeelemente sowie elektronische Steuerungen dieser im oder am Lenkrad anzuordnen. Bei der Betätigung solcher Motor-, Getriebeelemente oder elektronischer Steuerungen kommt es zu Wärmeentwicklungen.

Ein gattungsgemäßes Lenkrad ist aus der WO 2007/009420 A1 bekannt. In das Lenkrad ist ein Überlagerungsantrieb zur Betätigung einer Überlagerungslenkung integriert.

Die DE 20 2004 005 181 U1 beschreibt ein Lenkrad, in das wärmeableitende Mittel in Form einer Röhre aus einem wärmeleitenden Material integriert sind. Die wärmeableitende Funktion kann durch ein Peltier-Element und/oder einen Ventilator unterstützt werden, die mit einem wärmeabgebenden Funktionsbereich der Röhre gekoppelt sind.

Der Erfindung liegt das Problem zugrunde, ein Lenkrad für ein Kraftfahrzeug zu schaffen, bei dem eine hohe Wärmeentwicklung von in oder am Lenkrad angebrachten Funktionselementen, insbesondere von Komponenten eines Überlagerungsantriebs, nicht zu Temperaturerhöhungen führt, die so hoch sind, dass sie für die Funktionsweise von Funktionselementen störend sind.

Dieses Problem wird erfindungsgemäß durch die Schaffung eines Lenkrads mit den Merkmalen des Patentanspruchs 1 gelöst. Ausgestaltungen der Erfindung sind in den abhängigen Ansprüchen angegeben.

Danach umfasst das einen Lenkradkranz, eine Lenkradnabe und einen Überlagerungsantrieb zur Betätigung einer Überlagerungslenkung aufweisende Lenkrad Mittel zur Ableitung von Wärme von dem Lenkrad in Form einer Kontakteinheit, die der Führung von Leitungen zur elektrischen Verbindung von wenigstens einem im oder am Lenkrad angeordneten elektrischen Bauteil mit wenigstens einem nicht im oder am Lenkrad angeordneten elektrischen Bauteil des Kraftfahrzeuges dient, wobei wenigstens ein Teil der Kontakteinheit bei einer Drehung des Lenkrades mit dem Lenkrad mit rotiert.

Durch eine solche elektrische Kontakteinheit kann Wärme, die im Betrieb des Lenkrades und/oder im Betrieb von in oder am Lenkrad angebrachten Funktionselementen erzeugt wird, vom Lenkrad abgeleitet werden. Durch die Ableitung von Wärme durch die elektrische Kontakteinheit kann eine Erhöhung der Temperatur durch eine Wärmeerzeugung, die so hoch ist, dass sie für die Funktionsweise der Funktionselemente störend wäre, verhindert werden.

Die Wärmeableitung erfolgt dabei in effektiver Weise, wobei Wärme vom Lenkrad auf die Kontakteinheit und insbesondere auf den mit dem Lenkrad mitdrehenden Teil der Kontakteinheit übertragen wird, der diese Wärme beispielsweise über Kühlrippen und/oder Kühlschlitze durch Wärmestrahlung und/oder Konvektion nach außen abgibt. Eine Ableitung von Wärme kann dabei durch eine Luftkonvektion unterstützt werden, die durch eine Rotation des Lenkrads und des mitrotierenden Teils der Kontakteinheit erzeugt wird.

Die Mittel zur Ableitung von Wärme umfassen beispielsweise eine zur Ableitung von Wärme relativ zum Lenkradinneren nach außen gewandte, gerippte und/oder mit Schlitzen versehene Oberfläche.

Weiter kann vorgesehen sein, dass die Mittel zur Ableitung von Wärme ein sich zwischen einem ersten Raumbereich und einem dazu beabstandeten, zweiten Raumbereich erstreckendes Wärmebrückenelement und/oder ein Wärmeleitelement umfassen. Beispielsweise ist ein Wärmebrückenelement mit dem mitrotierenden Teil der Kontakteinheit thermisch gekoppelt, wobei es einen Transport von Wärme vom mitrotierenden Teil der Kontakteinheit über das Wärmeleitelement zu einem aktiven oder passiven Kühlelement bewirkt.

Das Lenkrad umfasst einen Überlagerungsantrieb zur Betätigung einer Überlagerungslenkung, mit der ein durch Betätigung des Lenkradkranzes erzeugter Lenkwinkel durch einen von der Überlagerungslenkung erzeugbarer Überlagerungswinkel überlagerbar ist, so dass sich eine jeweilige Drehbewegung einer mit dem Lenkrad verbundenen Lenkwelle aus einem durch Betätigung des Lenkradkranzes erzeugbaren Lenkwinkel und einem durch Betätigung der Überlagerungslenkung erzeugbaren Überlagerungswinkel zusammensetzt.

Der Überlagerungsantrieb umfasst einen Antriebsmotor und ein Überlagerungsantriebsgetriebe, wobei der Antriebsmotor und/oder das Überlagerungsantriebsgetriebe gemäß einer Ausgestaltung der Erfindung mit wenigstens einem Mittel versehen ist, das zur Ableitung von Wärme vom Überlagerungsantrieb dient. In einer Ausführungsvariante sind der Antriebsmotor und/oder das Überlagerungsantriebsgetriebe über ein Wärmeleitelement mit einem Kühlelement gekoppelt. Ein solches ist beispielsweise jeweils in einer Aussparung im Lenkradschaum angeordnet, wobei es auf der vom Lenkrad abgewandten Seite Kühlrippen aufweisen kann.

In einer weiteren Ausführungsvariante ist zwischen dem Antriebsmotor und dem Überlagerungsantriebsgetriebe ein Wärmeleitelement und/oder zwischen dem Überlagerungsantriebsgetriebe und einem Lenkradskelett ein Wärmeleitelement angeordnet, wobei das Wärmeleitelement der Wärmeleitung zwischen dem Antriebsmotor und dem Überlagerungsantriebsgetriebe bzw. zwischen dem Überlagerungsantrieb und dem Lenkradskelett dient. Das Wärmeleitelement ist beispielsweise als Wärmepad oder als Wärmeleitpaste ausgebildet.

In einer Ausführungsvariante ist die Kontakteinheit hohlkreiszylinderförmig ausgebildet, wobei ein äußerer Umfang den Teil der Kontakteinheit bildet, der mit dem Lenkrad mitrotiert. Der äußere Umfang der hohlkreiszylinderförmigen Kontakteinheit kann dabei auf seiner Außenseite mit Rippen und/oder Schlitzen zur Kühlung versehen sein.

Ein Ausführungsbeispiel sieht vor, dass die Kühlrippen auf dem Umfang der kreiszylinderförmig ausgebildeten Kontakteinheit so vorgesehen sind, dass sie entlang des Umfangs kreisförmig um diesen Umfang verlaufen. Diese Variante ist besonders vorteilhaft in Kombination mit einem Wärmebrückenelement, dass so ausgebildet ist, dass es um die kreiszylinderförmig ausgebildete Kontakteinheit angeordnet ist und einen Ring aufweist, der zu den Kühlrippen der Kontakteinheit passend ausgebildete Kühlrippen aufweist. Diese Ausgestaltung ermöglicht, dass der mitrotierende Teil der Kontakteinheit relativ zu einem Wärmebrückenelement drehbar ist, über das Wärme zusätzlich auf ein Kühlelement abgeleitet wird.

Weitere Einzelheiten und Vorteile der Erfindung werden bei der nachfolgenden Beschreibung von Ausführungsbeispielen anhand der Figuren deutlich werden. Es zeigen:
- Fig. 1A, 1B:: eine perspektivische Seitenansicht bzw. Rückansicht eines Lenkrads mit einem Lenkradkranz und einer mit dem Lenkradkranz verbundenen Lenkradnabe sowie einem Überlagerungsantrieb zur Betätigung einer Überlagerungslenkung und einer Kontakteinheit;
- Fig. 2: eine perspektivische Draufsicht auf eine Kontakteinheit, die der Führung von Leitungen zur elektrischen Verbindung von im oder am Lenkrad angeordneten Bauteilen mit nicht im oder am Lenkrad angeordneten Bauteilen des Kraftfahrzeuges dient;
- Fig. 3A - 3C:: perspektivische Rückansichten eines Lenkrades mit einem Lenkradkranz und einer mit dem Lenkradkranz verbundenen Lenkradnabe und einer Kontakteinheit sowie Lenkradschaum;
- Fig. 4: eine perspektivische Rückansicht eines Lenkrades mit einem Lenkradkranz und einer mit dem Lenkradkranz verbundenen Lenkradnabe sowie einem Überlagerungsantrieb zur Betätigung einer Überlagerungslenkung und einer Kontakteinheit mit Lenkradschaum und Kühlelementen;
- Fig. 5: eine perspektivische Seitenansicht des in Figur 4 dargestellten Überlagerungsantriebes sowie der dort dargestellten Kühlelemente (ohne Abbildung des in Figur 4 dargestellten Lenkradschaumes) mit Wärmerohren;
- Fig. 6A, 6B: eine perspektivische Seitenansicht eines Lenkrades mit einem Lenkradkranz und einer mit dem Lenkradkranz verbundenen Lenkradnabe und einem Überlagerungsantrieb zur Betätigung einer Überlagerungslenkung sowie einer Kontakteinheit und Wärmeleitelementen;
- Fig. 7: einen Teil einer perspektivischen Explosionszeichnung, die eine Kontakteinheit umfasst, die mit einem nicht abgebildeten Lenkrad zusammenwirkt, und die über eine Wärmebrücke Wärme auf ein Kühlelement leitet;
- Fig.8: eine perspektivische Seitenansicht eines Lenkrades, wie es in einer Lenksäule eines Kraftfahrzeuges angeordnet ist, wobei es mit einer nicht abgebildeten Kontakteinheit in Verbindung steht, die über eine Wärmebrücke Wärme auf ein Kühlelement leitet.
- Fig. 9: eine perspektivische Seitenansicht einer Kontakteinheit, durch die eine Lenkwelle geführt ist und die auf eine Wärmebrücke Wärme überträgt; und
- Fig. 10: eine perspektivische Seitenansicht auf eine Kontakteinheit, durch die eine Lenkwelle geführt ist und die auf eine Wärmebrücke Wärme überträgt.

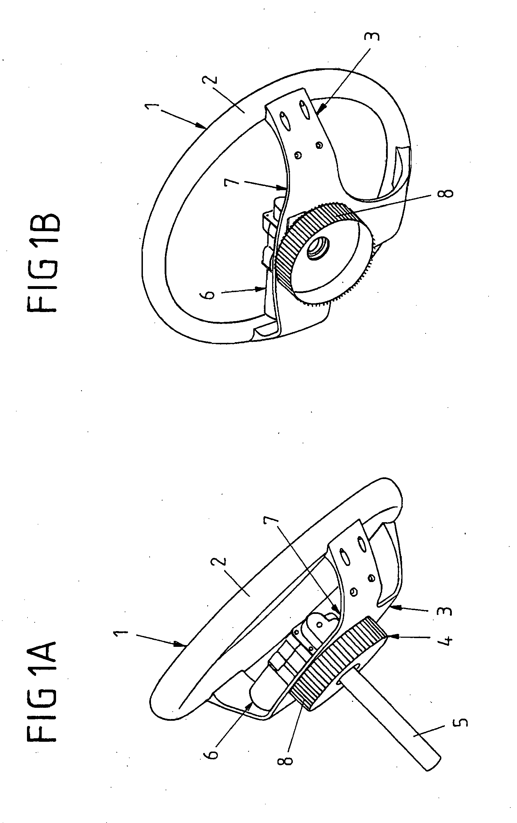

Die Fig. 1A, 1B zeigen perspektivische Seitenansichten eines Lenkrades 1 mit einem Lenkradkranz 2 zur drehenden Betätigung des Lenkrades 1 und mit einer Lenkradnabe 7 zur Verbindung des Lenkrades 1 mit einer von dem Lenkrad 1 separaten Lenkwelle 5, wobei die Lenkradnabe 7 von einem Lenkradskelett 3 aus metallischem Material gebildet ist. Die Lenkradnabe 7 ist über Speichen mit dem Lenkradkranz 2 verbunden.

Des Weiteren umfasst das Lenkrad 1 einen Überlagerungsantrieb 6 zur Betätigung einer Überlagerungslenkung. Mit dem Überlagerungsantrieb 6 ist ein durch Betätigen des Lenkradkranzes 2 erzeugter Lenkwinkel durch einen von der Überlagerungslenkung erzeugbaren Überlagerungswinkel überlagerbar. Damit ist ein durch Betätigung des Lenkradkranzes 2 erzeugter Lenkwinkel durch einen von der Überlagerungslenkung erzeugbaren Überlagerungswinkel überlagerbar, so dass sich eine jeweilige Drehbewegung einer mit dem Lenkrad 1 verbundenen Lenkwelle 5 aus einem durch Betätigung des Lenkradkranzes 2 erzeugbaren Lenkwinkel und durch Betätigung der Überlagerungslenkung erzeugbaren Überlagerungswinkel zusammensetzt.

An der Lenkradnabe 7 ist an der unteren Seite des Lenkrades eine Kontakteinheit 4 angeordnet. Diese dient der Führung von Leitungen zur elektrischen Verbindung von elektrischen Bauteilen des Lenkrades mit nicht im Lenkrad 1 befindlichen elektrischen Bauteilen des Kraftfahrzeuges, wobei ein Teil 8 der Kontakteinheit 4 bei einer Drehung des Lenkrades mit dem Lenkrad 1 mitrotiert. Dieser mitrotierende Teil 8 der Kontakteinheit 4 besteht zumindest teilweise aus einem thermisch leitenden Material und ist thermisch leitend an das Lenkradskelett 3 bzw. den Überlagerungsantrieb 6 gekoppelt.

Der mitrotierende Teil 8 der Kontakteinheit 4 stellt einen Rotor der Kontakteinheit dar, während ein nicht mitrotierender Teil der Kontakteinheit 4 einen Stator der Kontakteinheit 4 bildet. Der Stator ist dabei ortsfest, d.h. nicht drehbar festgelegt, beispielsweise an einer Lenksäulenverkleidung oder an einer unmittelbar hinter dem Lenkrad 1 angeordneten Lenkstockbaugruppe.

Die Kontakteinheit 4 ist hohlkreiszylinderförmig ausgebildet, wobei ein äußerer Umfang des Teiles 8 der Kontakteinheit 4, der mit dem Lenkrad 1 mitrotiert, auf seiner Außenseite mit Rippen und/oder Schlitzen zur Kühlung versehen ist.

Somit kann Wärme vom Lenkradskelett 3 bzw. dem Überlagerungsantrieb 6 auf die Kontakteinheit 4 und insbesondere auf den mit dem Lenkrad 1 mitdrehenden Teil 8 der Kontakteinheit 4 übertragen werden, der diese Wärme über die Kühlrippen bzw. Kühlschlitze durch Wärmestrahlung und Konvektion nach außen abgibt.

Die Figur 1B zeigt das in Figur 1A abgebildete Lenkrad 1 ohne die Lenkwelle und aus leicht veränderter Perspektive.

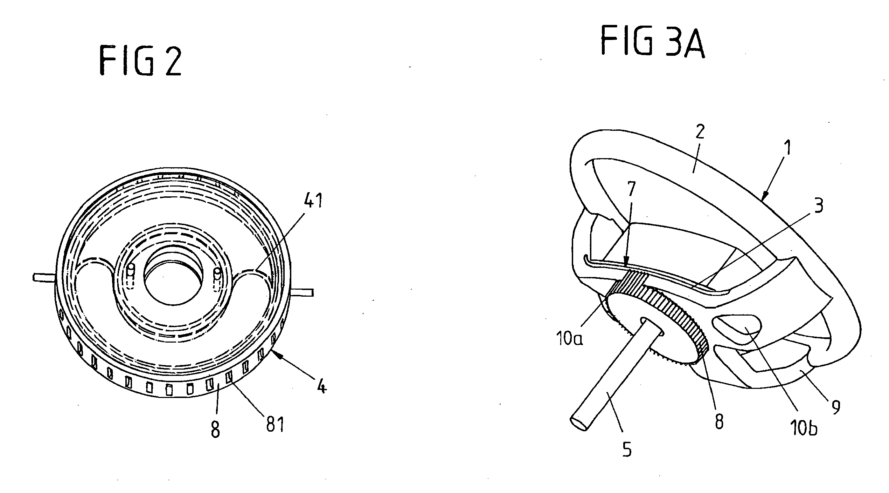

Die Figur 2 zeigt eine Kontakteinheit 4 und den Teil 8 der Kontakteinheit 4, der dazu vorgesehen und eingerichtet ist, bei einer Drehung eines nicht abgebildeten Lenkrades mit dem Lenkrad mit zu rotieren (Rotor). Hierbei ist die Kontakteinheit 4 im Wesentlichen kreiszylinderförmig ausgebildet und weist eine im Querschnitt kreisförmige Freimachung in ihrem Inneren auf, die dazu vorgesehen ist, Leitungen 41 zur elektrischen Verbindung von elektrischen Bauteilen des Lenkrades mit nicht im Lenkrad befindlichen elektrischen Bauteilen des Kraftfahrzeuges aufzunehmen. Die Leitungen 41 verbinden den mitrotierenden Teil 8 mit einem nicht dargestellten am Fahrzeug festgelegten Teil (Stator) der Kontakteinheit. Der äußere Teil 8 der Kontakteinheit 4 ist dazu vorgesehen, mit dem Lenkrad bei einer Drehbewegung mitzurotieren und weist auf dem umlaufenden Umfang des Kreiszylinders der Kontakteinheit 4 Öffnungen 81 auf, die Kühlschlitze bilden. Wird Wärme z. B. vom Lenkradskelett 3 des Lenkrades mittels Wärmeleitung auf die Kontakteinheit 4 übertragen, kann diese die Wärme durch Wärmeleitung auf den äußeren Teil der Kontakteinheit 8 leiten und durch die Verursachung einer Konvektion von Luft und Abstrahlung von Wärme mittels der Kühlschlitze 81 eine Kühlung des Lenkrades bewirken.

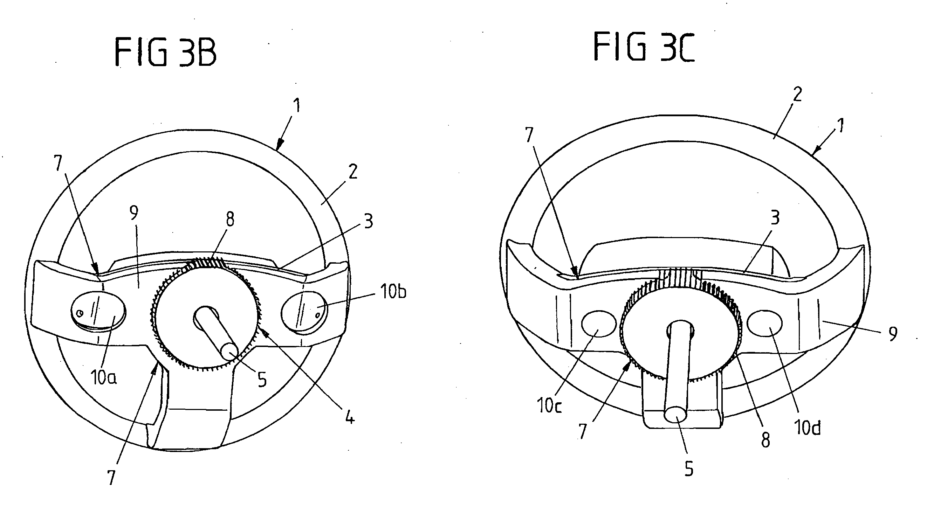

Die Figuren 3A und 3B zeigen eine Ausführungsform eines Lenkrades 1 mit einem Lenkradkranz 2 und einer Lenkradnabe 7, die Teil eines Lenkradskelettes 3 ist, das mit dem Lenkradkranz 2 über Speichen verbunden ist. Das Lenkrad 1 umfasst eine wie in den Figuren 1A und 1B abgebildete und in Zusammenhang mit diesen und der Fig. 2 beschriebene Kontakteinheit 4. Es ist mit einer Lenkwelle 5 gekoppelt. Der äußere Teil 8 der Kontakteinheit 4 ist mit Kühlrippen und/oder Kühlschlitzen versehen. Hierüber kann eine Kühlung durch Wärmeabstrahlung und Luftkonvektion stattfinden, so dass Wärme vom Lenkrad 1, insbesondere vom Lenkradskelett 3, über die Kontakteinheit 4 abgeleitet werden kann. Das Lenkradskelett 3 ist hierbei zum Teil mit einem Lenkradschaum 9 versehen. Abweichend von üblichen Ausführungsformen ist der Lenkradschaum 9 hierbei nicht auf der ganzen vom Fahrer abgewandten, hinteren Seite des Lenkradskelett 3 aufgeschäumt. Vielmehr ist das Lenkradskelett 3 in bestimmten Bereichen 10a, 10b der vom Fahrer abgewandten Seite frei von Lenkradschaum 9. Es kann auch vorgesehen sein, dass das Lenkradskelett 3 zumindest auf der vom Fahrer abgewandten Seite des Lenkradskeletts 3 vollständig frei von Lenkradschaum 9 ist.

Insbesondere ist kein Lenkradschaum 9 in einem Bereich des Lenkradskeletts 3 vorgesehen, der direkt an den äußeren Teil der Kontakteinheit 8 angrenzt.

Dies ist deshalb vorteilhaft, weil der Lenkradschaum 9 aus einem Schaummaterial besteht, das eine schlechte Wärmeleitfähigkeit aufweist und er, wenn er unmittelbar an die Kontakteinheit 4 anstoßen würde, eine Ableitung von Wärme nach außen über die gerippte Oberfläche (d. h. über die Kühlrippen) des äußeren Teils der Kontakteinheit 8 vermindern oder verhindern würde.

Es sind im vorliegenden Ausführungsbeispiel zwei bezüglich der Mitte des Lenkrades 1 symmetrisch angeordnete, ungefähr kreisförmige Aussparungen 10a, 10b im Lenkradschaum 9 vorgesehen. Über die kreisförmigen Aussparungen 10a, 10b kann Wärme vom Lenkrad 1 oder von an oder in dem Lenkrad 1 angeordneten Bauteilen nach außen abgeleitet werden.

Dadurch, dass an den Aussparungen 10a, 10b, kein Lenkradschaum 9 vorgesehen ist, wird Wärmeabstrahlung und/oder Konvektion von Luft ermöglicht, die einen zusätzlichen Wärmetransport weg vom Lenkrad 1 ermöglicht.

Eine Alternative zu dem Ausführungsbeispiel der Figuren 3A und 3B ist in Fig. 3C dargestellt. Hier sind statt der vorher beschriebenen Aussparungen 10a, 10b Bereiche 10c, 10d vorgesehen, die aus einem wärmeleitfähigen Material bestehen. Dazu kann die Lenkradumschäumung selbst, zumindest partiell, Wärme leitend ausgeführt werden, bzw. es befinden sich in diesen Bereichen angeschäumte Kühlrippen. Alternativ können mit dem Lenkradskelett Wärme leitend verbundene und in den Lenkradschaum eingebettete Kühlelemente vorgesehen sein. Diese Kühlelemente können auch direkt an das Lenkradskelett angegossen sein.

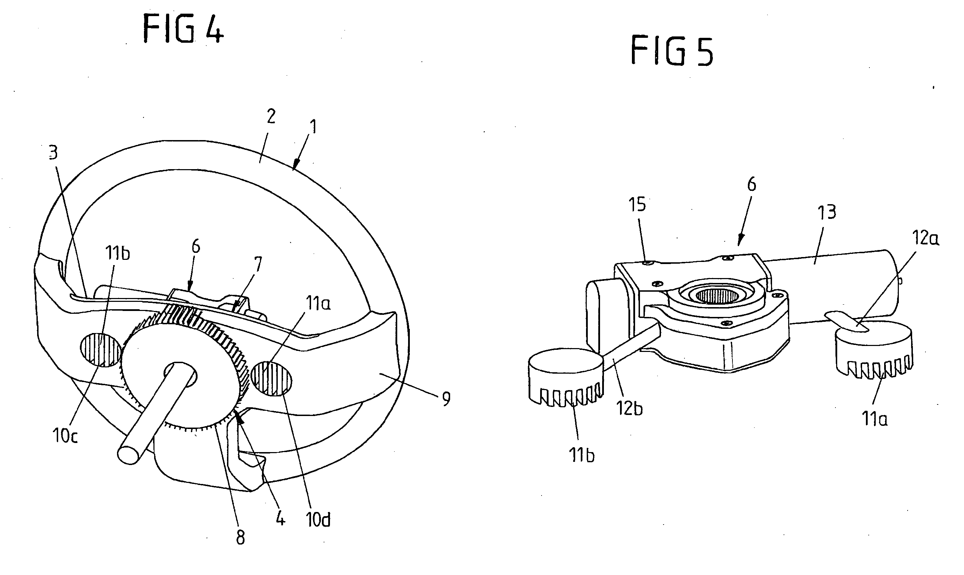

Fig. 4 zeigt eine perspektivische Rückansicht eines zu dem in der Fig. 3C gezeigten Lenkrades ähnlichen Lenkrades 1, bei dem aber auf die Darstellung einer Abdeckung verzichtet wurde und ein Überlagerungsantrieb 6 sichtbar ist, dessen Überlagerungsantriebsgetriebe auf der Lenkradnabe 7 angeordnet ist. Dieses Lenkrad 1 unterscheidet sich gegenüber dem in der Fig. 3C gezeigten Lenkrad dadurch, dass in den Bereichen 10c, 10d im Lenkradschaum Kühlelemente 11a, 11 b angeordnet sind, die mit dem Überlagerungsantrieb 6 Wärme leitend verbunden sind. Dabei ist in jedem der symmetrisch bezüglich der Mitte des Lenkrades 1 angeordneten Bereichen 10c, 10d eines der beiden im Wesentlichen kreisförmig ausgebildeten Kühlelement 11a, 11 b angeordnet, die jeweils auf der vom Lenkrad 1 abgewandten Seite Kühlrippen aufweisen. Über jedes der Kühlelemente 11a, 11 b kann aufgrund von Wärmeabstrahlung und/oder aufgrund von Luftkonvektion Wärme vom Lenkrad 1 nach außen abgeleitet werden. Diese Ableitung von Wärme vom Lenkrad erfolgt zusätzlich zu der Ableitung von Wärme vom Lenkrad durch die Kontakteinheit 4 bzw. den äußeren Teil 8 der Kontakteinheit 4.

Hierbei dienen die Kühlelemente 11a, 11b und die Kontakteinheit 4 als Mittel zur Ableitung von Wärme vom Lenkrad 1, insbesondere von Wärme, die bei Betätigung des Überlagerungsantriebs 6 erzeugt wird.

Die Figur 5 zeigt eine perspektivische Ansicht der in Figur 4 abgebildeten Überlagerungsantrieb 6. Der Überlagerungsantrieb weist einen Antriebsmotor 13 und ein Überlagerungsantriebsgetriebe 15 auf.

Der Antriebsmotor 13 ist über ein Wärmerohr 12a (in Form einer sogenannten "Heat-Pipe") mit dem Kühlelement 11a verbunden. Ein Wärmetransport wird durch das Wärmerohr 12a dabei unter anderem dadurch verursacht, dass das Wärmerohr 12a so eingerichtet ist, dass in seinem Inneren in einem ersten Bereich ein flüssiger Stoff verdampft und an einem davon beabstandeten und in der Nähe des Kühlelementes 11a angeordneten zweiten Bereich ein gasförmiger Stoff kondensiert. Dabei wird in dem ersten Bereich Verdampfungswärme vom verdampfenden Stoff aufgenommen und im zweiten Bereich Verdampfungswärme vom kondensierenden Stoff abgegeben.

Es handelt sich bei dem Kühlelement 11a in Figur 5 um das gleiche Kühlelement, das auch in Figur 4 gezeigt ist. Hierdurch kann beim Antrieb des Überlagerungsantriebs 6 durch den Antriebsmotor 13 erzeugte Wärme über das Wärmerohr 12a und das Kühlelement 11a abgeleitet werden.

Der Überlagerungsantrieb 6 weist das Überlagerungsantriebsgetriebe 15 auf, das über ein hierzu vorgesehenes (ebenfalls als sogenannte "Heat-Pipe" ausgebildetes) Wärmerohr 12b zu dem Kühlelement 11 b Wärme transportiert. Man beachte, dass es sich bei dem Kühlelement 11 b um das bereits in der Figur 4 erläuterte Kühlelement 11 b handelt. Hierdurch kann bei dem Betrieb des Überlagerungsantriebs 6 im Überlagerungsantriebsgetriebe 15 erzeugte Wärme über das Wärmerohr 12b an das Kühlelement 11b weitergegeben werden und somit eine Kühlung des Überlagerungsantriebsgetriebes 15 erfolgen.

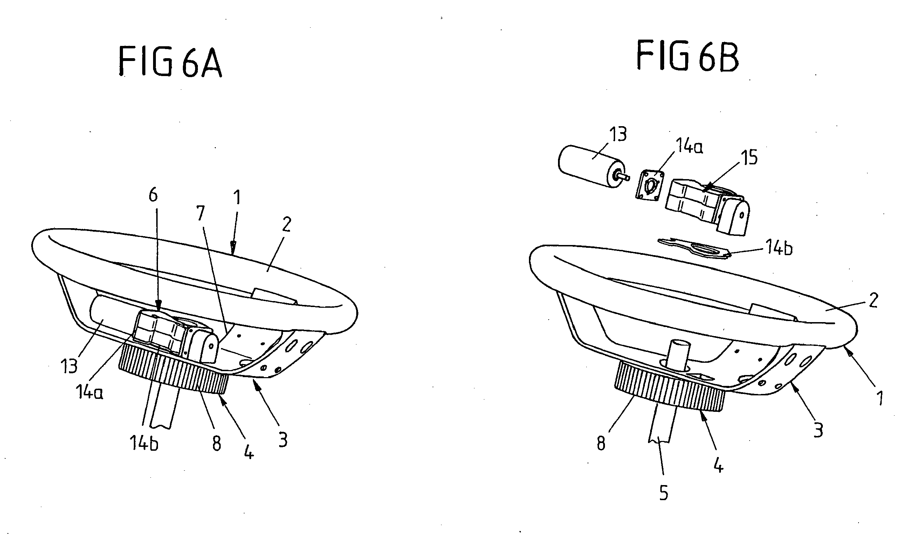

Die Figuren 6A und 6B zeigen eine perspektivische Seitenansicht (Fig. 6A) bzw. in Teilen eine Explosionszeichnung (Fig. 6B) eines Lenkrades 1 mit einem Lenkradkranz 2 und einem Lenkradskelett 3, das eine Lenkradnabe 7 aufweist. Das Lenkrad 1 ist mit einer Kontakteinheit 4 versehen, die auf ihrer Außenseite Kühlrippen aufweist.

Auf der Lenkradnabe 7 ist ein Überlagerungsantrieb 6 angeordnet. Dieser Überlagerungsantrieb umfasst einen Antriebsmotor 13 und ein Überlagerungsantriebsgetriebe 15 zur Kopplung einer Bewegung des Antriebsmotors mit einer Bewegung einer Lenkwelle 5. Zwischen Antriebsmotor 13 und Überlagerungsantriebsgetriebe 15 ist ein Wärmeleitelement 14a und zwischen Überlagerungsantriebsgetriebe 15 und dem Lenkradskelett 3 ist ein anderes Wärmeleitelement 14b angeordnet. Die Wärmeleitelemente 14a, 14b sind vorliegend als sogenannte Wärmepads ausgebildet. Alternativ oder zusätzlich können auch Wärmeleitpasten verwendet werden. Die Wärmeleitelemente 14a, 14b dienen der Wärmeleitung zwischen dem Überlagerungsantrieb 6 und dem Lenkradskelett 3 bzw. zwischen dem Antriebsmotor 13 und dem Überlagerungsantriebsgetriebe 15. Durch die Wärmeleitelemente 14a, 14b wird eine Wärmeleitung innerhalb des Überlagerungsantriebs 6 und zusätzlich eine Wärmeleitung von dem Überlagerungsantrieb 6 weg auf das Lenkradskelett 3 verbessert. Diese Wärmeleitung ist besonders effektiv dadurch, dass die Wärmeleitelemente 14a, 14b aus besonders wärmeleitfähigem Material ausgebildet sind.

Hierdurch wird bei der Betätigung des Überlagerungsantriebs 6 erzeugte Wärme effektiv auf das Lenkradskelett 3 geleitet und von diesem über die Kontakteinheit 4 und den mit Kühlrippen versehenen äußeren Teil 8 der Kontakteinheit 4 nach außen geleitet.

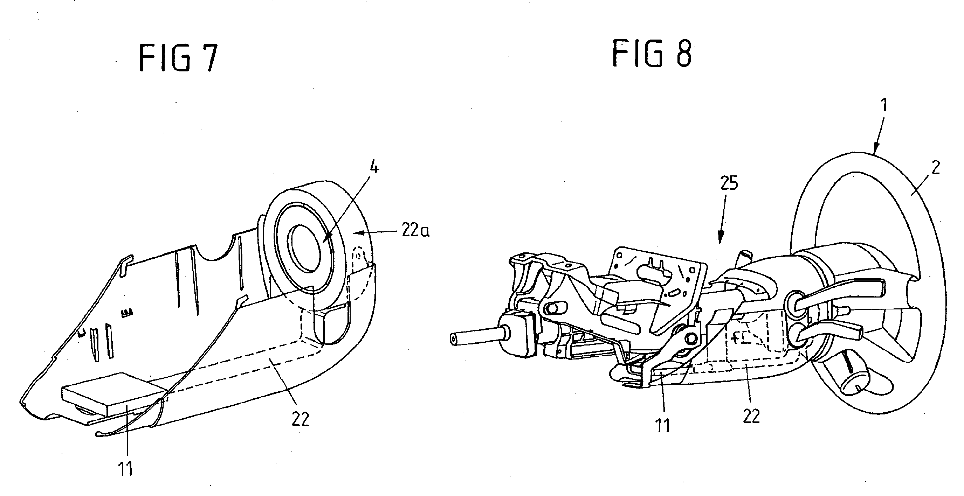

Die Figur 7 zeigt eine perspektivische Seitenansicht eines Ausschnittes einer Lenksäule. Hierbei ist eine Kontakteinheit 4 dargestellt, deren nicht mitrotierender Teil (Stator) von einem Wärmebrückenelement 22a umgeben ist, das über ein Wärmeleitelement 22 mit einem in der Lenksäule untergebrachten (aktiven oder passiven) Kühlelement 11 verbunden ist. Das Wärmeleitelement 22 besteht aus besonders Wärme leitenden Materialen, wie z. B. Metallen, oder ist als Wärme leitende Anordnung, wie z. B. als Wärmerohr (sogenannte "Heat-Pipe") ausgeführt. Hierdurch wird Wärme von einem nicht mitrotierenden Teil der Kontakteinheit 4 über das Wärmebrückenelement 22a und weiter über das Wärmeleitelement vom Lenkrad in die Lenksäule transportiert. Der Wärmetransport findet zu dem Kühlelement 11 statt, das innerhalb der Lenksäulenverkleidung untergebracht ist. Alternativ oder zusätzlich kann auch eine Verbindung des Wärmeleitelementes 22 mit metallischen Bauteilen der Lenksäule erfolgen.

Eine derartige Anordnung findet Anwendung, wenn eine u.a. im Zusammenhang mit den Figuren 1A, 1B beschriebene Wärmeabgabe nach außen nicht ausreicht bzw. nicht möglich ist. In so einem Fall muss durch geeignete Maßnahmen ein ausreichender Wärmeübergang von dem mitrotierende Teil (Rotor) zum nicht mitrotierende Teil der Kontakteinheit sichergestellt werden. Das kann beispielsweise durch Kühlrippen am Rotor erfolgen, die eine Wärmekonvektion in Richtung des nicht mitrotierenden Teils der Kontakteinheit erzeugen.

Die Figur 8 zeigt die Anordnung, wie sie in Figur 7 dargestellt ist, wobei die Anordnung in einer schematisch dargestellten Lenksäule 25 untergebracht ist. Hierbei ist die Kontakteinheit zwischen Lenkrad 1 und Lenksäule 25 untergebracht, was aufgrund der abgebildeten Bauteile der Lenksäule 25 nicht mehr ohne weiteres ersichtlich ist. Von der nicht sichtbaren Kontakteinheit führt ein Wärmeleitelement 22 in das Innere der Lenksäule 25 und leitet Wärme von der Kontakteinheit in das Innere der Lenksäule 25 zu einem mit dem Wärmeleitelement 22 verbundenen Kühlelement 11. Dieses Kühlelement 11 kann ein aktives oder passives Kühlelement sein. Weiterhin ist das Wärmeleitelement 22 über eine Wärmebrücke mit einem Teil der Lenksäule 25 verbunden.

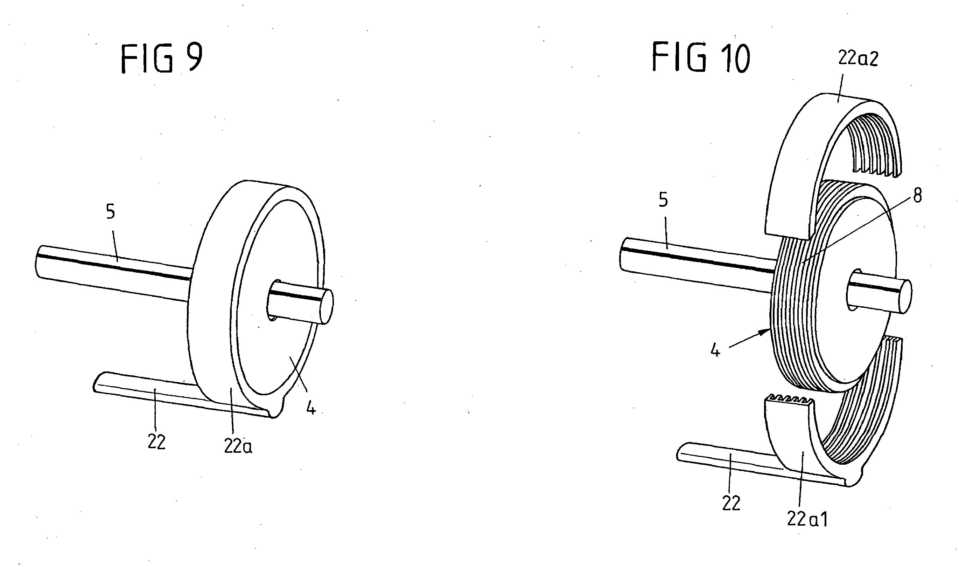

Die Figuren 9 und 10 zeigen, wie Wärme über eines in Form einer äußeren Schale ausgebildeten Wärmebrückenelementes 22a von der Kontakteinheit 4 mittels Wärme transportierender Materialien, aus denen das Wärmebrückenelement 22a besteht bzw. mit denen das Wärmebrückenelement 22a versehen ist, über das Wärmeleitelement 22 weg geleitet wird. Hierbei kann z. B. vorgesehen sein, dass ein Teil des Wärmetransports durch Wärmediffusion bewerkstelligt wird und/oder durch eine sogenannte "Heat pipe" erfolgt.

Die Kontakteinheit 4 ist dabei so gebildet, dass der Wärmetransport mittels einer gezielten aufeinander abgestimmten geometrischen Ausbildung ineinander greifender Kühlrippen der Kontakteinheit 4 und des Wärmebrückenelementes 22a von der Kontakteinheit 4 auf das Wärmeleitelement 22 erfolgt.

Die Wärmebrücke kann hierbei einstückig, wie in Figur 9 gezeigt, oder mehrstückig mit Teilen 22a1, 22a2, wie in der Explosionszeichnung in Figur 10 gezeigt, ausgeführt sein.

Die Figuren 9 und 10 zeigen des Weiteren eine alternative Ausführungsform von Kühlrippen im Vergleich zu den z. B. in den Figuren 1A und 1B gezeigten Kühlrippen der Kontakteinheit 4. Hierbei sind die Kühlrippen auf dem Umfang der kreiszylinderförmig ausgebildeten Kontakteinheit 4 so vorgesehen, dass sie entlang des Umfangs kreisförmig um diesen Umfang verlaufen. In den Figuren 1A und 1B verlaufen die Kühlrippen hingegen (im Wesentlichen) senkrecht zum Kreisumfang der kreiszylinderförmig ausgebildeten Kontakteinheit 4. Ein in der Umgebung der Kontakteinheit 4 angeordneter Teil des Wärmebrückenelementes 22a1, 22a2 ist hierbei so ausgebildet, dass er um die kreiszylinderförmig ausgebildete Kontakteinheit 4 angeordnet ist und einen Ring aufweist, der zu den Kühlrippen der Kontakteinheit 4 passend ausgebildete Kühlrippen aufweist, so dass eine möglichst große Oberfläche der Wärmebrückenelemente 22a1, 22a2 dem äußeren Teil 8 der Kontakteinheit 4 gegenübersteht. Durch die Kontakteinheit 4 verläuft eine Lenkwelle 5.

Hierbei ist in einer Ausführungsvariante vorgesehen, dass die Kontakteinheit 4 relativ zu den Wärmebrückenelementen 22a1, 22a2 drehbar ist. In einer solchen Ausführungsvariante ist die Kontakteinheit 4 bzw. der äußere Teil 8 der Kontakteinheit 4 drehbar gegenüber den Wärmebrückenelementen 22a1, 22a2 gelagert. Eine Übertragung von Wärme von dem äußeren Teil 8 der Kontakteinheit 4 über die in der geometrischen Ausgestaltung optimierte Oberfläche auf das Innere des Ringes der Wärmebrückenelemente 22a1, 22a2 ist dabei insbesondere durch Konvektion von Luft oder Wärmestrahlung möglich. Auch kann der Zwischenraum zwischen den einander zugewandten Bereichen des äußeren Teils 8 der Kontaktbrücke 4 einerseits und den Wärmebrückenelementen 22a1, 22a2 mit einem Wärme leitenden Medium ausgefüllt sein, welches eine Relativbewegung zulässt.

Bezüglich der Fig. 1A, 1B, 3A bis 3C, 4, 6A, 6B und 11 wird angemerkt, dass die dort abgebildeten perspektivischen Ansichten jeweils eines Lenkrades schematisch sind.

Eine nicht abgebildete Lenkradabdeckung kann zusätzlich als Bestandteil des Lenkrads vorgesehen sein. Sie ist nicht abgebildet, um in den Figuren eine Sicht auf Bauteile zu ermöglichen, die durch eine solche Abdeckung verdeckt würden. Auch weitere Komponenten wie z.B. elektrische Bedienelemente und/oder eine elektronische Steuereinheit (ECU = "Electronic Control Unit") können in das Lenkrad integriert sein.

## Patentansprüche

1. Lenkrad eines Kraftfährzeuges mit
- einem Lenkradkranz (2) zur drehenden Betätigung des Lenkrades (1),
- einer Lenkradnabe (7) zur Verbindung des Lenkrades (1) mit einer von dem Lenkrad (1) separaten Lenkwelle (5) des Kraftfahrzeuges, und
- einem Überlagerungsantrieb (6) zur Betätigung einer Überlagerungslenkung, mit der ein durch Betätigung des Lenkradkranzes (2) erzeugter Lenkwinkel durch einen von der Überlagerungslenkung erzeugbaren Überlagerungswinkel überlagerbar ist, so dass sich eine jeweilige Drehbewegung einer mit dem Lenkrad (1) verbundenen Lenkwelle (5) aus einem durch Betätigung des Lenkradkranzes (2) erzeugbaren Lenkwinkel und einem durch Betätigung der Überlagerungslenkung erzeugbaren Überlagerungswinkel zusammensetzt,
**gekennzeichnet durch**
Mittel zur Ableitung von Wärme von dem Lenkrad (1), wobei die Mittel zur Ableitung von Wärme eine Kontakteinheit (4) umfassen, die der Führung von Leitungen zur elektrischen Verbindung von wenigstens einem im oder am Lenkrad (1) angeordneten elektrischen Bauteil mit wenigstens einem nicht im oder am Lenkrad (1) angeordneten elektrischen Bauteil des Kraftfahrzeuges dient, und wobei wenigstens ein Teil (8) der Kontakteinheit (4) bei einer Drehung des Lenkrades (1) mit dem Lenkrad (1) mitrotiert.

2. Lenkrad nach Anspruch 1, **dadurch gekennzeichnet, dass** die Mittel zur Ableitung von Wärme (4, 8) durch Rotation eine Luftkonvektion und damit einen Wärmetransport verursachen.

3. Lenkrad nach einem der vorhergehenden Ansprüche, **dadurch gekennzeichnet, dass** die Mittel zur Ableitung von Wärme (4, 8) eine zur Ableitung von Wärme relativ zum Lenkradinneren nach außen gewandte, gerippte und/oder mit Schlitzen (81) versehene Oberfläche umfassen.

4. Lenkrad nach einem der vorhergehenden Ansprüche, **dadurch gekennzeichnet, dass** die Mittel zur Ableitung von Wärme (4, 8) ein sich zwischen einem ersten Raumbereich (4) und einem dazu beabstandeten, zweiten Raumbereich (11) erstreckendes Wärmebrückenelement (22a) und/oder Wärmeleitelement (12a, 12b; 22) umfassen.

5. Lenkrad nach Anspruch 4, **dadurch gekennzeichnet, dass** das Wärmebrückenelement (22a) mit dem mitrotierenden Teil (8) der Kontakteinheit (4) thermisch gekoppelt ist und einen Transport von Wärme vom mitrotierenden Teil (8) der Kontakteinheit (4) über das Wärmeleitelement (22) zu einem aktiven oder passiven Kühlelement (11) bewirkt.

6. Lenkrad nach einem der vorangehenden Ansprüche, **dadurch gekennzeichnet, dass** der Überlagerungsantrieb (6) einen Antriebsmotor (13) und ein Überlagerungsantriebsgetriebe (15) umfasst, wobei der Antriebsmotor (13) und/oder das Überlagerungsantriebsgetriebe (15) mit wenigstens einem Mittel (12a, 12b; 14a, 14b) versehen ist, das zur Ableitung von Wärme vom Überlagerungsantrieb (6) dient.

7. Lenkrad nach Anspruch 4, **dadurch gekennzeichnet, dass** der Antriebsmotor (13) und/oder das Überlagerungsantriebsgetriebe (15) über ein Wärmeleitelement (12a, 12b) mit einem Kühlelement (11a, 11 b) gekoppelt sind.

8. Lenkrad nach Anspruch 7, **dadurch gekennzeichnet, dass** das Kühlelement (11a, 11b) jeweils in einer Aussparung (10c, 10d) im Lenkradschaum angeordnet ist und auf der vom Lenkrad (1) abgewandten Seite Kühlrippen aufweist.

9. Lenkrad nach einem der vorhergehenden Ansprüche, soweit rückbezogen auf Anspruch 6, **dadurch gekennzeichnet, dass** zwischen dem Antriebsmotor (13) und dem Überlagerungsantriebsgetriebe (15) ein Wärmeleitelement (14a) und/oder zwischen dem Überlagerungsantriebsgetriebe (15) und einem Lenkradskelett (3) ein Wärmeleitelement (14b) angeordnet ist, wobei das Wärmeleitelement (14a, 14b) der Wärmeleitung zwischen dem Antriebsmotor (13) und dem Überlagerungsantriebsgetriebe (15) bzw. zwischen dem Überlagerungsantrieb (6) und dem Lenkradskelett (3) dient.

10. Lenkrad nach einem der vorhergehenden Ansprüche, **dadurch gekennzeichnet, dass** die Kontakteinheit (4) hohlkreiszylinderförmig ausgebildet ist, wobei ein äußerer Umfang den Teil (8) der Kontakteinheit (4) bildet, der mit dem Lenkrad (1) mitrotiert.

11. Lenkrad nach Anspruch 10, **dadurch gekennzeichnet, dass** der äußere Umfang (8) der hohlkreiszylinderförmigen Kontakteinheit (4) auf seiner Außenseite mit Rippen und/oder Schlitzen (81) zur Kühlung versehen ist.

12. Lenkrad nach Anspruch 11, **dadurch gekennzeichnet, dass** Kühlrippen auf dem Umfang (8) der kreiszylinderförmig ausgebildeten Kontakteinheit (4) so vorgesehen, dass sie entlang des Umfangs (8) kreisförmig um diesen Umfang (8) verlaufen.

13. Lenkrad nach Anspruch 12, soweit rückbezogen auf Anspruch 5, **dadurch gekennzeichnet, dass** das Wärmebrückenelement (22a; 22a1, 22a2) so ausgebildet ist, dass es um die kreiszylinderförmig ausgebildete Kontakteinheit (4) angeordnet ist und einen Ring aufweist, der zu den Kühlrippen der Kontakteinheit (4) passend ausgebildete Kühlrippen aufweist.

14. Lenkrad nach einem der vorhergehenden Ansprüche, **dadurch gekennzeichnet, dass** Wärme vom Lenkrad (1) auf den mitrotierenden Teil (8) der Kontakteinheit (4) übertragen wird, wobei der mitrotierende Teil (8) derart ausgestaltet ist, dass er diese Wärme durch Wärmestrahlung und/oder Konvektion nach außen abgibt.

## Claims

1. Steering wheel of a motor vehicle, with
- a steering-wheel rim (2) for actuating the steering wheel (1) in rotation,
- a steering-wheel hub (7) for connecting the steering wheel (1) to a steering shaft (5), separate from the steering wheel (1), of the motor vehicle, and
- an overlay drive (6) for actuating an overlay steering, by means of which a steering angle generated by the actuation of the steering-wheel rim (2) can be overlaid by an overlay angle capable of being generated by the overlay steering, so that the respective rotational movement of a steering shaft (5) connected to the steering wheel (1) is composed of a steering angle capable of being generated by the actuation of the steering-wheel rim (2) and of an overlay angle capable of being generated by the actuation of the overlay steering, **characterized by** means for dissipating heat from the steering wheel (1), the means for dissipating heat comprising a contact unit (4) which serves for the guidance of lines for the electrical connection of at least one electrical component arranged in or on the steering wheel (1) to at least one electrical component, not arranged in or on the steering wheel (1), of the motor vehicle, at least one part (8) of the contact unit (4) corotating with the steering wheel (1) during rotation of the steering wheel (1).

2. Steering wheel according to Claim 1, **characterized in that** the means for dissipating heat (4, 8) by rotation cause air convection and consequently heat transport.

3. Steering wheel according to one of the preceding claims, **characterized in that** the means for dissipating heat (4, 8) comprise a surface which, for the dissipation of heat, faces outwards in relation to the inside of the steering wheel, is ribbed and/or is provided with slots (81).

4. Steering wheel according to one of the preceding claims, **characterized in that** the means for dissipating heat (4, 8) comprise a heat bridge element (22a) and/or heat conduction element (12a, 12b; 22) extending between a first spatial region (4) and a second spatial region (11) spaced apart from the latter.

5. Steering wheel according to Claim 4, **characterized in that** the heat bridge element (22a) is thermally coupled to the corotating part (8) of the contact unit (4) and causes a transport of heat from the corotating part (8) of the contact element (4) via the heat conduction element (22) to an active or passive cooling element (11).

6. Steering wheel according to one of the preceding claims, **characterized in that** the overlay drive (6) comprises a drive motor (13) and an overlay-drive gear (15), the drive motor (13) and/or the overlay-drive gear (15) being provided with at least one means (12a, 12b; 14a, 14b) which serves for dissipating heat from the overlay drive (6).

7. Steering wheel according to Claim 4, **characterized in that** the drive motor (13) and/or the overlay-drive gear (15) are/is coupled to a cooling element (11a, 11b) via a heat conduction element (12a, 12b).

8. Steering wheel according to Claim 7, **characterized in that** the cooling element (11a, 11b) is arranged in each case in a clearance (10c, 10d) in the steering-wheel foam and has cooling ribs on the side facing away from the steering wheel (1).

9. Steering wheel according to one of the preceding claims, insofar as it refers back to Claim 6, **characterized in that** a heat conduction element (14a) is arranged between the drive motor (13) and the overlay-drive gear (15) and/or a heat conduction element (14b) is arranged between the overlay-drive gear (15) and a steering-wheel skeleton (3), the heat conduction element (14a, 14b) serving for heat conduction between the drive motor (13) and the overlay-drive gear (15) and between the overlay drive (6) and the steering-wheel skeleton (3) respectively.

10. Steering wheel according to one of the preceding claims, **characterized in that** the contact unit (4) is designed in the form of a hollow circular cylinder, an outer circumference forming that part (8) of the contact unit (4) which corotates with the steering wheel (1).

11. Steering wheel according to Claim 10, **characterized in that** the outer circumference (8) of the contact unit (4) in the form of a hollow circular cylinder is provided on its outside with ribs and/or slots (81) for cooling.

12. Steering wheel according to Claim 11, **characterized in that** cooling ribs are provided on the circumference (8) of the contact unit (4) designed in the form of a circular cylinder, such that they run along the circumference (8) circularly around this circumference (8).

13. Steering wheel according to Claim 12, insofar as it refers back to Claim 5, **characterized in that** the heat bridge element (22a; 22a1, 22a2) is designed such that it is arranged around the contact unit (4) designed in the form of a circular cylinder and has a ring which has cooling ribs designed to fit with the cooling ribs of the contact unit (4).

14. Steering wheel according to one of the preceding claims, **characterized in that** heat is transmitted from the steering wheel (1) to the corotating part (8) of the contact unit (4), the corotating part (8) being configured in such a way that it discharges this heat outwards by heat radiation and/or convection.

## Revendications

1. Volant pour un véhicule automobile comprenant :
- une jante de volant (2) pour l'actionnement rotatif du volant (1),
- un moyeu de volant (7) pour relier le volant (1) à un arbre de colonne de direction (5) du véhicule automobile séparé du volant (1), et
- un entraînement de superposition (6) pour l'actionnement d'une direction à superposition, avec laquelle un angle de direction généré par l'actionnement de la jante de volant (2) peut être superposé à un angle de superposition pouvant être généré par la direction à superposition, de telle sorte qu'un mouvement de rotation respectif d'un arbre de colonne de direction (5) connecté au volant (1) se compose d'un angle de direction pouvant être généré par l'actionnement de la jante de volant (2) et d'un angle de superposition pouvant être généré par l'actionnement de la direction à superposition,
**caractérisé par**
des moyens pour dévier la chaleur du volant (1), les moyens pour dévier la chaleur comprenant une unité de contact (4) qui sert à guider des conduites pour connecter électriquement au moins un composant électrique disposé dans ou sur le volant (1) à au moins un composant électrique du véhicule automobile non disposé dans ou sur le volant (1), et au moins une partie (8) de l'unité de contact (4) tournant avec le volant (1) lors d'une rotation du volant (1).

2. Volant selon la revendication 1, **caractérisé en ce que** les moyens pour dévier la chaleur (4, 8) provoquent, par rotation, une convexion d'air et donc un transport de la chaleur.

3. Volant selon l'une quelconque des revendications précédentes, **caractérisé en ce que** les moyens pour dévier la chaleur (4, 8) comprennent une surface tournée vers l'extérieur par rapport à l'intérieur du volant pour dévier la chaleur, ondulée et/ou pourvue de fentes (81).

4. Volant selon l'une quelconque des revendications précédentes, **caractérisé en ce que** les moyens pour dévier la chaleur (4, 8) comprennent un élément de pontage de la chaleur (22a) et/ou un élément de conduction de la chaleur (12a, 12b ; 22) s'étendant entre une première région spatiale (4) et une deuxième région spatiale (11) espacée de celle-ci.

5. Volant selon la revendication 4, **caractérisé en ce que** l'élément de pontage de la chaleur (22a) est accouplé thermiquement à la partie (8) co-rotative de l'unité de contact (4) et provoque un transport de la chaleur de la partie co-rotative (8) de l'unité de contact (4) par le biais de l'élément de conduction de la chaleur (22) jusqu'à un élément de refroidissement (11) actif ou passif.

6. Volant selon l'une quelconque des revendications précédentes, **caractérisé en ce que** l'entraînement de superposition (6) comprend un moteur d'entraînement (13) et une transmission d'entraînement à superposition (15), le moteur d'entraînement (13) et/ou la transmission d'entraînement à superposition (15) étant pourvu(e)(s) d'au moins un moyen (12a, 12b ; 14a, 14b) qui sert à évacuer la chaleur depuis l'entraînement de superposition (6).

7. Volant selon la revendication 4, **caractérisé en ce que** le moteur d'entraînement (13) et/ou la transmission d'entraînement à superposition (15) sont accouplés par le biais d'un élément de conduction de la chaleur (12a, 12b) à un élément de refroidissement (11a, 11b).

8. Volant selon la revendication 7, **caractérisé en ce que** l'élément de refroidissement (11a, 11b) est à chaque fois disposé dans un évidement (10c, 10d) dans la mousse du volant et présente des nervures de refroidissement sur le côté opposé au volant (1).

9. Volant selon l'une quelconque des revendications précédentes, dans la mesure où elles se rapportent à la revendication 6, **caractérisé en ce qu**'entre le moteur d'entraînement (13) et la transmission d'entraînement à superposition (15) est disposé un élément de conduction de la chaleur (14a) et/ou entre la transmission d'entraînement à superposition (15) et un squelette du volant (3) est disposé un élément de conduction de la chaleur (14b), l'élément de conduction de la chaleur (14a, 14b) servant à conduire la chaleur entre le moteur d'entraînement (13) et la transmission d'entraînement à superposition (15), respectivement entre l'entraînement de superposition (6) et le squelette du volant (3).

10. Volant selon l'une quelconque des revendications précédentes, **caractérisé en ce que** l'unité de contact (4) est réalisée sous forme cylindrique circulaire creuse, une périphérie extérieure formant la partie (8) de l'unité de contact (4), laquelle tourne conjointement avec le volant (1).

11. Volant selon la revendication 10, **caractérisé en ce que** la périphérie extérieure (8) de l'unité de contact (4) de forme cylindrique circulaire creuse est pourvue sur son côté extérieur de nervures et/ou de fentes (81) pour le refroidissement.

12. Volant selon la revendication 11, **caractérisé en ce que** des nervures de refroidissement sont prévues sur la périphérie (8) de l'unité de contact (4) réalisée sous forme cylindrique circulaire, de telle sorte qu'elles s'étendent le long de la périphérie (8) sous forme circulaire autour de cette périphérie (8).

13. Volant selon la revendication 12, dans la mesure où elle se rapporte à la revendication 5, **caractérisé en ce que** l'élément de pontage de la chaleur (22a ; 22al, 22a2) est réalisé de telle sorte qu'il soit disposé autour de l'unité de contact (4) réalisée sous forme cylindrique circulaire et qu'il présente une bague qui présente des nervures de refroidissement adaptées aux nervures de refroidissement de l'unité de contact (4).

14. Volant selon l'une quelconque des revendications précédentes, **caractérisé en ce que** la chaleur provenant du volant (1) est transmise à la partie (8) co-rotative de l'unité de contact (4), la partie (8) co-rotative étant réalisée de telle sorte qu'elle diffuse vers l'extérieur cette chaleur par rayonnement thermique et/ou par convexion.
